Europäisches Patentamt

European Patent Office

Office européen des brevets

(11) Publication number: **0 300 773**
**A1**

# EUROPEAN PATENT APPLICATION

(21) Application number: 88306677.1

(22) Date of filing: 20.07.88

(51) Int. Cl.⁴: **B 60 C 19/12**

(30) Priority: 22.07.87 IL 83283

(43) Date of publication of application:
25.01.89 Bulletin 89/04

(84) Designated Contracting States:
AT BE CH DE ES FR GB GR IT LI LU NL SE

(71) Applicant: Saban, Oded
12 Recanati Street
Ramat Aviv (IL)

Shilo, Abraham
37 Shimon Atressi
Ramat Gan (IL)

(72) Inventor: Saban, Oded
12 Recanati Street
Ramat Aviv (IL)

Shilo, Abraham
37 Shimon Atressi
Ramat Gan (IL)

(74) Representative: Howden, Christopher Andrew et al
FORRESTER & BOEHMERT Widenmayerstrasse 4/I
D-8000 München 22 (DE)

(54) Means for protecting the inner tube of a pneumatic tyre.

(57) The present invention relates to protection means for protecting the inner tubes of pneumatic tyres, for example on bicycle wheels, from damage and puncture by sharp objects penetrating the tyre cover. The protection means comprises an annular member made of flexible material and which is, in use, located between the tread portion of the tyre cover and the adjacent part of the inner tube. Preferably, in cross-section in a plane including the wheel axis, the annular member is curved so as to be concave towards the wheel axis. The annular member preferably has tapered or feathered edges to avoid abrupt steps in the contour which the inner tube must follow.

EP 0 300 773 A1

## Description

### Means for protecting the inner tube of a pneumatic tyre

The present invention relates to pneumatic tyres, such as bicycle tyres.

It is well known that pneumatic tyres of vehicle wheels are prone to puncture by sharp items which, in the case of pneumatic tyres of the kind having inner tubes, generally arises by such objects penetrating the tread portion of the outer cover and then penetrating and puncturing the inner tube. Pneumatic tyres on bicycle wheels, which are generally of the type having inner tubes, are particularly prone to puncture in this way because the tyre covers on such bicycle wheels are relatively thin and thus much more vulnerable than those on heavier vehicles.

To overcome this problem, it has been suggested to insert into the tyre a protective liner as described in U.S. Patent No. 4321407. However, as such liner is cut to length before fitting, in some cases it may be too short leaving a gap between the two ends or in other cases it may be too long so that one end must overlap the other end when the insert is in position. Furthermore, the two end portions move relative to each other, in use, and thus do not remain in their desired positions.

It is an object of the present invention to provide improved means for protecting from puncture the inner tube of a pneumatic tyre equipped with an inner tube.

According to one aspect of the invention there is provided means for protecting from puncture an inner tube of a pneumatic tyre, comprising an annular band of tough flexible material adapted to be interposed between the tread part of the tyre cover and the inner tube.

The annular band may be a rubber or a like annular strip which is inserted into the tyre intermediate the tyre cover and the inner tube.

In the preferred embodiment the cross section of said rubber strip, in a plane including the axis of the wheel, is concave, the edges thereof being tapered or feathered.

An embodiment of the invention will now be described by way of example, with reference to the annexed drawings in which:-

FIGURE 1 is a perspective cross sectional view, partly cut away, of a bicycle wheel having a pneumatic tyre, with an inner tube, and fitted with a protective strip in accordance with the invention,

FIGURE 2 is a cross sectional view of the strip, and

FIGURE 3 is a further cross sectional view of an alternative strip.

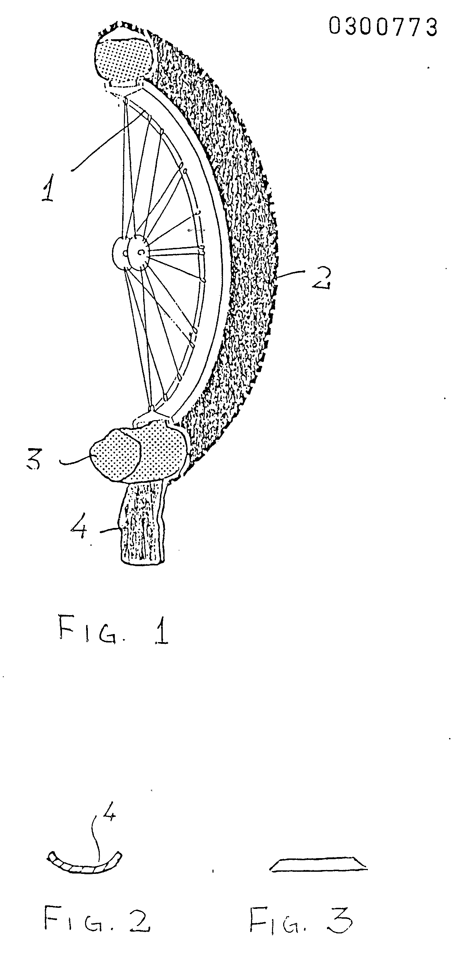

Turning first to Figure 1, the wheel is provided with a tyre including a tyre cover 2, an inner tube 3 and a strip 4 of rubber or other tough flexible material interposed between the tread part of the tyre cover and the inner tube 3. Although the strip 4 is shown in Figure 1 as having a free end, this is merely a feature of the illustrative sectioning. In practice the strip 4 is endless and has the form of an annular band, conforming closely with the inner surface of the part of the tyre cover 2 which carries the tread, i.e. which normally engages the ground, in use.

The strip 4 is of a width, measured axially of the wheel, which is substantially greater than its thickness and sufficient to span the tread part of the tyre cover.

As shown in Figure 2, in cross section in a plane in which the axis of the wheel lies, the strip 4 is curved so as to be concave towards said axis, in the same way as the inner surface of the tread part of the tyre cover with which it cooperates. This cross-sectional shape may be a property of the unstressed strip 4 before the latter is fitted. However, if the strip 4 is of a stretchable material, the strip 4 may simply be deformed to this cross-sectional shape after it is installed, when the tyre is inflated.

The strip 4 may be inserted into the tyre by removing the tyre from the wheel in the conventional manner, removing the inner tube 3 and placing the strip 4 in position in the tyre cover before the re-insertion of the tube 3 and refitting the tyre in the conventional manner.

The band 4 may be formed by cutting an appropriate length from a continuous strip of the appropriate cross-section, and glueing the ends of said length together to form the annular band to be fitted into the tyre. Alternatively, the band 4 may be manufactured, e.g. by moulding, in its desired annular form.

In the latter case, annular bands 4 may be made in various predetermined sizes, to suit corresponding sizes of tyres.

In the further embodiment of strip 4 shown in Figure 3, the edges 5 of the strip are tapered or feathered to avoid a step being formed at each edge of the strip, when the strip is fitted, in the effective internal surface of the tyre cover to which the inner tube must, of course, conform.

The strip of Figure 2 preferably has its edges tapered or feathered also, in the same manner as the strip of Figure 3.

The features disclosed in the foregoing description, in the following claims and/or in the accompanying drawings may, both separately and in any combination thereof, be material for realising the invention in diverse forms thereof.

### Claims

1. Means for protecting from puncture an inner tube of a pneumatic tyre, comprising an annular band of tough flexible material adapted to be interposed between the tread part of the tyre cover and the inner tube.

2. Protecting means according to claim 1 wherein, in section in a plane including the axis around which the band extends, the band is curved so as to be concave towards said axis.

3. Protecting means according to claim 1 or claim 2 wherein the edges of the band are tapered or feathered so as to blend with the internal surface of the tyre cover and avoid leaving abrupt steps in the surface to which the inner tube must conform.

4. Protecting means according to any of claims 1 to 3 wherein said band is formed by glueing together the ends of a strip of said tough flexible material.

5. A wheel having a pneumatic tyre and an inner tube, and interposed between the tread part of the tyre cover and the inner tube, protecting means in accordance with any of claims 1 to 4.

6. A method of protecting from puncture an inner tube of a pneumatic tyre, comprising, during fitting of the tyre to a wheel rim, fitting an annular band of a tough flexible material on the inner side of the tyre cover, fitting the inner tube within the cover so that the band is interposed between the tread part of the tyre cover and the inner tube, and subsequently inflating the inner tube to hold the band in place between the tyre cover and the inner tube.

0300773

FIG. 1

FIG. 2

FIG. 3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | FR-A-2 362 735 (SCIMECA) <br> * Page 3, lines 1-25; page 4, line 10 - page 6, line 9 * | 1-6 | B 60 C 19/12 |
| A | US-A-4 263 074 (D. PRICE) <br> * Column 6, lines 16-60; figure 3 * | 4 | |

TECHNICAL FIELDS SEARCHED (Int. Cl.4)

B 60 C 19/00

The present search report has been drawn up for all claims

| Place of search | Date of completion of the search | Examiner |
|---|---|---|
| THE HAGUE | 09-09-1988 | SCHMITT L.P. |